# EUROPEAN PATENT SPECIFICATION

(11) **EP 1 601 737 B1**
(45) Date of publication and mention of the grant of the patent: **31.10.2007**
(21) Application number: 04713309.5
(22) Date of filing: 20.02.2004
(51) Int. Cl.: C09J 167/04

(54) **PHA ADHESIVE COMPOSITIONS**
PHA-KLEBSTOFFE
COMPOSITIONS ADHESIVES DE PHA

(30) Priority: 21.02.2003 US 449187 P
(43) Date of publication of application: 07.12.2005
(73) Proprietor: METABOLIX, INC., Cambridge, MA 02139 (US)
(72) Inventor: WHITEHOUSE, Robert, S., Lexington, MA 01242 (US)
(74) Representative: Snodin, Michael D.
(86) International application number: PCT/US2004/004992
(87) International publication number: WO 2004/076583

(56) References cited:
- EP-A1- 0 553 394
- EP-A1- 1 236 753
- EP-A2- 0 741 177
- EP-A2- 1 193 294
- WO-A1-94/10257
- WO-A1-95/10577
- WO-A1-95/20615
- WO-A1-96/05264
- WO-A1-97/04036
- WO-A2-02/10303
- DE-A1- 4 430 415
- US-A- 4 511 687
- US-A- 5 192 612
- US-A- 5 502 158
- US-A- 5 646 217
- US-A- 5 711 842
- US-B1- 6 472 502
- DATABASE WPI Section Ch, Week 199404 Derwent Publications Ltd., London, GB; Class A17, AN 1994-032009 XP002287554 & JP 05 339557 A (MITSUI TOATSU CHEM INC) 21 December 1993 (1993-12-21)
- DATABASE WPI Section Ch, Week 200003 Derwent Publications Ltd., London, GB; Class A23, AN 2000-033687 XP002287555 & JP 11 302521 A (SHIMADZU CORP) 2 November 1999 (1999-11-02)
- DATABASE WPI Section Ch, Week 200233 Derwent Publications Ltd., London, GB; Class A81, AN 2002-285642 XP002287556 & JP 2001 316658 A (3M INNOVATIVE PROPERTIES CO) 16 November 2001 (2001-11-16)

## Description

### TECHNICAL FIELD

The invention relates to adhesive compositions that contain at least one polyhydroxyalkanoate (PHA), and related methods and articles.

### BACKGROUND

Adhesive compositions can be used to form a bond between two surfaces, such as, for example, surfaces made of wood, metal, plastic, paper, cloth, mammalian skin and/or tissues.

In certain applications, a surface can be coated with a relatively tacky adhesive composition, commonly referred to as a pressure sensitive adhesive. The coated surface can be contacted with a second, uncoated surface using relatively light pressure to form an adhesive bond between the two surfaces.

In some applications, one or both surfaces can be coated with an adhesive that is relatively non-tacky prior to contact with the surface(s), commonly referred to as a contact adhesive. When the surfaces are contacted under appropriate conditions of temperature and/or pressure, an adhesive bond can form between the surfaces.

### SUMMARY

The invention relates to PHA adhesive compositions, and related methods and articles.

In one aspect, the invention features an adhesive composition that contains a PHA, which composition is as defined in the attached Claims 1 to 22.

In another aspect, the invention features an article as defined in the attached Claims 23 to 30.

In one aspect, the invention features a method as defined in the attached Claim. 31. Processing the composition as indicated in the attached Claim 31 can include removing at least some of the solvent from the composition, e.g., removing solvent from the composition at a rate so that an open time of the layer is less than a time period at which the PHA reaches its final crystallinity in the layer. The layer can contain, e.g., at most about 95 weight percent adhesive additives. The layer can contain, e.g., at most about 40 weight percent solvent. The layer can contain, e.g., at least about five weight percent PHA. The peel bond strength of the layer can be at least about 100 Nm⁻². The pressure can be at most about 334.738 kPa (50 psig). The layer can have an open time of at least about 70 minutes. The PHA can have a weight average molecular weight of from about 10,000 Daltons to about 900,000 Daltons. The PHA in the layer can have a crystallinity of from about 5% to about 65%. The PHA in the layer has a glass transition temperature of from about -40°C to about 20°C. The composition can include at least two different PHAs, e.g., one of the PHAs can have a first weight average molecular weight, and a different PHA can have a second weight average molecular weight, a difference between the first and second weight average molecular weights being at least about 1,000 Daltons.

In a further aspect, the invention features an adhesive composition that includes two different PHAs. The difference in the weight average molecular weight of the two PHAs is at least about 1,000 Daltons. In one aspect, the invention features an article that includes a substrate and an adhesive composition supported by the substrate. The adhesive composition includes two different PHAs. The difference in the weight average molecular weight of the two PHAs is at least about 1,000 Daltons.

In another aspect, the invention features an adhesive composition that includes two different PHAs. At least one of the PHAs has a polydispersity index of at least about two. In a further aspect, the invention features an article that includes a substrate and an adhesive composition supported by the substrate. The adhesive composition includes two different PHAs. At least one of the PHAs has a polydispersity index of at least about two. Embodiments can include one or more of the following features.

The PHA can have a glass transition temperature of from, for example, about -40°C to about 20°C.

The PHA can have a crystallinity of, for example, from about 5% to about 65%.

The PHA can have a polydispersity index of, for example, at least about 2, at least about 2,5.

The composition can have a surface tack time value of, for example, at most about 15 seconds.

The composition can have an open time of, for example, at least about 10 minutes.

The composition can further include one or more solvents.

The composition can contain one or more adhesive additives (e.g., one or more tackifiers, cross-linking agents, initiators, colorants, waxes, stabilizers and/or plasticizers).

The composition can contain at least two different PHAs. The difference in the weight average molecular weight of two of the PHAs can be, for example, at least about 1,000 Daltons, at least about 50,000 Daltons, at least about 100,000 Daltons.

The pressure can be, for example, at most about 334.738 kPa (50 psig).

The peel bond strength can be, for example, at least about 1.00 Nm⁻².

Other features, objects, and advantages of the invention will be apparent from the description and the claims.

### DETAILED DESCRIPTION

In general, the PHA adhesive compositions are as described in the attached Claims 1 to 22 and contain one or more PHAs, and optionally one or more additional components.(e.g., one or more solvents, one or more adhesive additives).

A PHA adhesive composition can have a relatively low surface tack. For example, a PHA adhesive composition can be substantially non-tacky to the touch prior to its use in forming an adhesive bond between two surfaces. The PHA adhesive composition of the present invention has a surface tack time value of at most about 15 seconds (e.g., at most about 12 seconds, at most about 10 seconds, at most about 9 seconds, at most about 8 seconds, at most about 7 seconds, at most about 6 seconds, at most about 5 seconds, at most about 4 seconds, at most about 3 seconds, at most about 2 seconds, at most about 1 second, at most 0.5 second, at most 0.1 second, zero seconds) prior to its use in forming an adhesive bond between two surfaces.

As referred to herein, the surface tack time value of a PHA adhesive composition is determined as follows. A galvanised steel washer having mass of 13.85 grams (g) with external diameter 38.17 millimeter (mm) and internal diameter 13.41 millimeter (mm) is placed onto a horizontally displaced surface that is coated with the PHA adhesive composition. The surface is then inverted, so that gravitational force on the object and the adhesive force of the composition on the object oppose each another. The time required for the object to fall from the surface is the surface tack time value of the PHA composition. In general, a PHA adhesive composition having a lower surface tack will have a shorter surface tack time value than a PHA adhesive composition having a higher surface tack.

A PHA composition can form a relatively strong bond between two surface when exposed to a relatively low laminating pressure. The PHA adhesive composition of the present invention forms an adhesive bond between two surfaces with a peel bond strength of at least about 10 Newtons per square meter (N/m²) (e.g., at least about 50 N/m², at least about 100 N/m², at least about 250 N/m², at least about 500 N/m², at least about 1000 N/m²) when the PHA composition is exposed to a laminating pressure of at most about 689.475 kilopascals (kPa) (100 pounds per square inch gauge (psig)) (e.g. at most about 620.528 kPa (90 psig), at most about 551.581 kPa (80 psig), at most about 482.633 kPa (70 psig), at most about 413.685 kPa (60 psig), at most about 344.738 kPa (50psig), at most about 275.790 kPa (40 psig), at most about 206.843 kPa (30 psig), at most about 137.895 kPa (20 psig), at most about 103.421 kPa (15 psig), at most about 68.948 kPa (10 psig), at most about 34.474 kPa (5 psig), at most about 6.895 kPa (1 psig)).

As used herein, a laminating pressure refers to a pressure applied to the composition when it is in contact with both surfaces.

As referred to herein, the peel bond strength of a bond between the two surfaces is determined according to the ASTM 1995-92 test method by placing the bonded surfaces in an Instron tensile testing machine and evaluating the force required to separate the surfaces using a 90 degree peel angle and a crosshead speed of 25 millimeter/minute.

A PHA composition can have a relatively long open time. For example; in certain embodiments, a PHA adhesive composition can have an open time of at least about 10 minutes (e.g., at least about 50 minutes, at least about 70 minutes at least about 100 minutes, at least about 200 minutes, at least about three hours, at least about six hours, at least about 12 hours, at least about 24 hours, at least about 48 hours, at least about 96 hours, at least about 120 hours). As used herein, the open time of a PHA composition refers to the maximum amount of time that the PHA adhesive composition can be exposed to ambient environmental conditions (e.g., ambient temperature, pressure, humidity) prior to its use in forming an adhesive bond: In some embodiments, the open time is generally an upper limit of permissible exposure and/or storage time of a PHA composition before the PHA composition is rendered a non-adhesive composition. In certain embodiments, the open time is exceeded when the PHA adhesive composition is unable to form an adhesive bond between two surfaces with a peel bond strength of at least about 10 N/m² when the compositions are exposed to a laminating pressure of at most about 689.475 kPa (100 psig).

A PHA is a polymer that has at least one monomer unit with the structure: 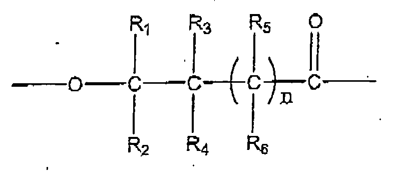 where n is zero or an integer (e.g., one, two , three, four, five, six, seven, eight, nine, 10, 11, 12, 13, 14, 15, etc.). Each of R₁, R₂, R₃, R₄, R₅ and R₆ is independently a hydrogen atom, a halogen atom or a hydrocarbon radical. A hydrocarbon radical contains at least one carbon atom (e.g., one carbon atom, two carbon atoms, three carbon atoms, four carbon atoms, five carbon atoms, six carbon atoms, seven carbon atoms, eight carbon atoms, etc.). A hydrocarbon radical can be saturated or unsaturated, substituted or unsubstituted, branched or straight chained, and/or cyclic or acyclic. Examples of substituted hydrocarbon radicals include halo-substituted hydrocarbon radicals, hydroxy-substituted hydrocarbon radicals, nitrogen-substituted hydrocarbon radicals and oxygen-substituted hydrocarbon radicals. Examples of hydrocarbon radicals include methyl, ethyl, propyl, butyl, pentyl, hexyl, octyl and decyl.

Examples of monomer units include 3-hydroxybutyrate, 3-hydroxypropionate, 3-hydroxyvalerate, 3-hydroxyhexanoate, 3-hydroxyheptanoate, 3-hydroxyoctanoate, 3-hydroxynonaoate, 3-hydroxydecanoate, 3-hydroxydodecanoate, 3-hydroxytetradecanoate, 3-hydroxyhexadecanoate, 3-hydroxyoctadecanoate, 3-hydroxy-4-pentenoate, 4-hydroxybutyrate, 4-hydroxyvalerate, 5-hydroxyvalerate, and 6-hydroxyhexanoate.

A PHA can be a homopolymer (all monomer units are the same). Examples of PHA homopolymers include poly 3-hydroxyalkanoates (e.g., poly 3-hydroxypropionate, poly 3-hydroxybutyrate, poly 3-hydroxyhexanoate, poly 3-hydroxyheptanoate, poly 3-hydroxyoctanoate, poly 3-hydroxydecanoate, poly 3-hydroxydodecanoate), poly 4-hydroxyalkanoates (e.g., poly 4-hydroxybutyrate), poly 5-hydroxyallranoates (e.g., poly 5-hydroxypentanoate), poly 6-hydroxyalkanoates (e.g., poly 6-hydroxyhexaxtoate) and polylactic acid. Another example of a homopolymer of interest is polyglycolic acid (for which there is only one carbon other than the carbonyl carbon in the monomer structure).

In the present invention, the PHA is a copolymer (contains two or more different monomer units)selected from the group comprising poly 3-hydroxybutyrate-co-3-hydroxypropionate, poly 3-hydroxybutyrate-co-4-hydroxybutyrate, poly 3-hydroxybutyrate-co-4-hydroxypentenoate, poly 3 -hydroxj,butyrate-co-3 -hydroxyhexano ate, poly 3-hydroxybutyrate-co-4-hydroxyvalerate, poly 3-hydroxybutyrate-co-6-hydroxyhexanoate, poly 3-hydroxybutyrate-co-3-hydroxyheptanoate, poly 3-hydroxybutyrate-co-3-hydroxyoctanoate, poly 3-hydroxybutyrate-co-3-hydroxydecanoate, poly 3-hydroxybutyrate-co-3-hydroxydodecanotate, poly 3-hydroxybutyrate-co-3-hydroxyoctanoate-co-3-hydroxydecanoate, and poly 3-hydroxybutyxate-co-3-hydroxyoctadecanoate. The PHA can have more than two different monomer units (e.g., three different monomer units, four different monomer units, five different monomer units, six different monomer units, seven different monomer units, eight different monomer units, nine different monomer units, etc.).

In certain embodiments, the PHA can be derived from biomass, such as plant biomass and/or microbial biomass (e.g., bacterial biomass, yeast biomass, fungal biomass)- Biomass-derived PHA can be formed, for example, via enzymatic polymerization of the monomer units The biomass can be formed of one or more of a vaziety of entities. Such entities include, for example, microbial strains for producing PHAs (e.g., *Alcaligenes eutrophus* (renamed as *Ralstonia eutropha), Bacillus, Alcaligenes latus, Azotobacter, Aeromonas, Cornamonas, Pseudonionads),* genetically engineered organisms, preferably containing no recombinant plasmids, for producing PHAs (e.g., *Pseudomonas, Ralstonia, Escherichia coli, Klebsiella),* yeasts for producing PHAs, and plant systems for producing PHAs. Such entities are disclosed, for example, in Lee, Biotechnology & Bioengineering 49:1-14 (1996); Braunegg et al., (1998), J. Biotechnology 65: 127-161; Madison, L. L. and Huisman, G. W. (1999), Metabolic Engineering of Poly(3-Hydroxyalkanoates): From DNA to Plastic. Microbiol. Mol. Biol. Rev. 63, 21-53; and Snell and Peoples 2002, Metabolic Engineering 4: 29-40.

In certain embodiments, the PHA can be derived by chemical synthesis, such as by the ring opening polymerization of β-lactone monomers using various catalysts or initiators such as aluminoxanes, distannoxanes, or alkoxy-zinc and alkoxy-aluminum compounds (see Agostini, D.E. et al. Polym. Sci., Part A-1, 9: 2775-2787 (1971); Gross, R.A. et al., Macromolecules 21:2657-2668 (1988); Dubois, P.I. et al., Macromolecules, 26:4407-4412 (1993); LeBorgne) A. and Spassky, N. Polymer, 30:2312-23 19 (1989); Tanahashi, N. and Doi, Y. Macromolecules, 24:5732-5733 (1991); Hori, Y.M. et al., Macromolecules, 26:4388-4390 (1993); Kemnitzer, J.E. et al., Macromolecules, 26:1221-1229 (1993); Hori, Y.M. et al., Macromolecules, 26:5533-5534 (1993); Hocking, P.J. and Marchessault, RH., Polym Bull., 30: 163-170 (1993). The PHA can also be obtained by condensation polymerization of esters (see Hubbs, J.C. and Harrison, M.N. U.S. Patent No.: 5,563, 239) or by chemoenzymatic methods (see Xie, et al., Macromolecules, 30:6997-6998 (1997)).

The PHA has a weight average molecular weight of from about 10,000 Daltons to about 900,000 Daltons (e.g., from about 10,000 Daltons to about 500,000 Daltons, from about 50,000 Daltons to about 250,000 Daltons, from about 75,000 Daltons to about 150,000 Daltons, from about 95,000 Daltons to about 115,000 Daltons). As used herein, weight average molecular weight is determined by gel permeation chromatography, using e.g., chloroform as both the eluent and diluent for the PHA samples. Calibration curves for determining molecular weights can be generated using polystyrene molecular weight standards.

A relatively low molecular weight PHA can be obtained as follows. A PHA of a weight average molecular weight of at least about 80,000 Daltons (e.g., at least about 100,000 Daltons, at least about 150,000 Daltons, at least about 200,000 Daltons, at least about 300,000 Daltons, prepared, at least about 400,000 Daltons, at least about 500,000 Daltons, at least about 600,000 Daltons, at least about 700,000 Daltons, at least about 800,000 Daltons, at least about 900,000 Daltons, at least about 1,000,000 Daltons, at least about 1,500,000 Daltons, at least about 2,000,000 Daltons) is prepared (e.g., by one of the methods described above). The PHA is then be subjected to an acid hydrolysis reaction during which the hydrolytic cleavage of one or more monomer units from the PHA can occur. The loss of one or more monomer units can result in the production of a lower molecular weight PHA (a PHA with fewer monomer units than the PHA introduced at the beginning of the hydrolysis reaction). The acid hydrolysis reaction can occur in the presence of a strong acid catalyst, e.g. sulfuric or hydrochloric acid. The reaction can be performed at ambient temperature or elevated temperatures of at least about 70°C (e.g., at least about 80°C, at least about 90°C, at least about 100°C, at least about 110°C, at least about 120°C at least about 130°C, at least about 140°C). The reaction can optionally be carried out in the presence of alcohols, diols or polyols, whereby a lower molecular weight PHA can be obtained in which the terminal carboxyl group of the PHA can be esterifed: PHA hydrolysis reactions are described in commonly owned, copending U.S. Patent Application 09/999,782 (Publication Date: June 6, 2002; Publication No.: US 2002/0068810 A1), which is hereby incorporated by reference.

In some embodiments, a PHA can have a polydispersity index (PDI) of at least about 2.0 (e.g., at least about 2.1, at least about 2.2, at least about 2.3, at least about 2.4, at least about 2.5; at least about 2.6, at least about 2.7, at least about 2.8, at least about 2.9). As referred to herein, the PDI of a PHA is calculated by dividing the weight average molecular weight of the PHA by the number average molecular weight, of the PEA. The number average molecular weight of a PHA, can be measured using gel permeation chromatography.

A PHA can have a glass transition temperature (Tg) of, for example, from about-40°C to about 20°C (e.g., from about-35°C to about 0°C, from about -30°C to about -5°C; from about-25°C to about -10°C). As referred to herein, the Tg of a PHA is determined using differential scanning calorimetry (DSC) as follows. The sample is heated in a differential scanning calorimeter from e.g., -50°C to +100°C at.10°C/minute. The glass transition temperature is the inflection in the DSC heat capacity versus temperature curve.

A PHA can have a volume percent crystallinity of from about 5% to about 65% (e.g., from about 20% to about 60%, from about 30% to about 55%, from about 40% to about 50%). As referred to herein, the volume crystallinity of a PHA is determined from the data contained in the DSC heat capacity versus temperature curve and is calculated by dividing the crystalline mass of the PHA sample by the total mass of the PHA sample.

A PHA adhesive composition can contain multiple different PHAs. In some embodiments, the composition can contain different PHAs (e.g., two different PHAs, three different PHAs, four different PHAs, five different PHAs) with a difference in the weight average molecular weight of two of the PHAs being at least 1,000 Daltons (e.g., at least 25,000 Daltons, at least 50,000 Daltons, at least 75,000 Daltons, at least 100,000 Daltons).

In some embodiments, a PHA adhesive composition can contain different PHAs (e.g., two different PHAs, three different PHAs, four different PHAs, five different PHAs) with a difference in the PDI of two of the PHAs being at least 0.05 (e.g., at least 0.10, at least 0.15, at least 0.20, at least 0.25, at least 0.30, at least 0.35, at least 0.40, at least 0.45, at least 0.50).

In certain embodiments, a PHA adhesive composition can contain one or more components in addition to the PHA. For example, in some embodiments, a PHA composition can contain at most about 95 weight percent (e.g., at most about 90 weight percent, at most about 80 weight percent, at most about 70 weight percent, at most about 60 weight percent, at most about 50 weight percent, at most about 40 weight percent, at most about 30 weight percent, at most about 20 weight percent, at most about 10 weight percent, at most about five weight percent, at most about two weight percent) of one or more additional components and/or at least about 5 weightpercent PHA (e.g., at least about 10 weight percent PHA, at least about 20 weight percent PHA, at least about 30 weight percent PHA, at least about 40 weight percent PHA, at least about 50 weight percent PHA, at least about 60 weight percent PHA, at least about 70 weight percent PHA, at least about 80 weight percent PHA, at least about 90 weight percent PHA, at least about 95 weight percent PHA, at least about 98 weight percent PHA).

In some embodiments, a PHA composition can contain one or more solvents. For example, in certain embodiments, a PHA adhesive composition can contain at most about 90 weight percent solvent (e.g., at most about 80 weight percent solvent, at most about 75 weight percent solvent, at most about 70 weight percent solvent, at most about 65 weight percent solvent, at most about 60 weight percent solvent, at most about 55 weight percent solvent, at most about 50 weight percent solvent, at most about 45 weight percent solvent, at most about 40 weight percent solvent, at most about 35 weight percent solvent, at most about 30 weight percent solvent, at most about 25 weight percent solvent, at most about 20 weight percent solvent, at most about 15 weight percent solvent, at most about 10 weight percent solvent, at most about five weight percent solvent, at most about two weight percent solvent, at most about one weight percent solvent).

In general, a solvent can be selected as desired. Examples of solvents include water and organic solvents. Examples of organic solvents include hexane, heptane, benzene, toluene, ether, methyl *tert-*butyl ether (MTBE), ethyl acetate, butyl acetate, methylene chloride, chloroform, acetonitrile, methanol, ethanol, isopropanol, and 2,2,2-trifluoroethanol.

In certain embodiments, the solvent can be a mixed solvent system comprising two or more solvents. Such solvent systems include homogeneous mixed aqueous solvent mixtures (e.g., acetonitrile/water), homogeneous mixed organic solvent mixtures (MTBE/butylacetate), heterogeneous mixed organic solvent mixtures (e.g., heptane/acetonitrile) or heterogeneous mixed organic solvent/water mixtures (e.g., coalescing solvents, e.g. toluene/water).

In certain embodiments, a PHA adhesive composition can contain one or more adhesive additives. For example, in some embodiments, a PHA adhesive composition can contain at most about 95 weight percent adhesive additive (e.g., at most about 90 weight percent adhesive additive, at most about 85 weight percent adhesive additive, at most about 80 weight percent adhesive additive, at most about 75 weight percent adhesive additive, at most about 70 weight percent adhesive additive, at most about 65 weight percent adhesive additive, at most about 60 weight percent adhesive additive, at most about 55 weight percent adhesive additive, at most about 50 weight percent adhesive additive, at most about 45 weight percent adhesive additive, at most about 40 weight percent adhesive additive, at most about 35 weight percent adhesive additive, at most about 30 weight percent adhesive additive, at most about 25 weight percent adhesive additive, at most about 20 weight percent adhesive additive, at most about 15 weight percent adhesive additive, at most about 10 weight percent adhesive additive, at most about 5 weight percent adhesive additive, at most about 1 weight percent adhesive additive, at most 0.5 weight percent adhesive additive) with the remainder being one or more PHAs and optionally one or more solvents.

Examples of adhesive additives include tackifiers (e.g., hydrocarbon tackifying resins). Hydrocarbon tackifying resins are commercially available, for example, as a terpene-type resin, (tradename ZONOREX, Arizona Chemical Company) or a phenolic modified terpene resin (tradename PICOTEX, Hercules Corporation).

In certain embodiments, a PHA adhesive composition can be cross-linked to improve internal strength of the adhesive compositions. In some embodiments, a PHA composition can contain a cross-linking agent, and optionally a thermal or photochemical initiator (e.g., benzoyl peroxide, benzophenone).

In certain embodiments, a PHA adhesive composition can contain a wax (e.g., 12-hydroxystearamide), a stabilizer (e.g., 1,3,5-trimethyl-2,4,6-tris-(3,5-di-tert-butyl-4-hydroxybenzyl) benzene), a plasticizer (e.g. a phthalate), and/or a colorant (e.g., titanium dioxide).

The PHA adhesive composition can be prepared by dissolving a PHA in a solvent to form a solution that contains at most about 50 weight percent PHA (e.g., at most about 45 weight percent PHA, at most about 40 weight percent PHA, at most about 35 weight percent PHA, at most about 30 weight percent PHA, at most about 25 weight percent PHA, at most about 20 weight percent PHA, at most about 15 weight percent PHA, at most about 14 weight percent PHA, at most about 13 weight percent PHA, at most about 12 weight percent PHA, at most about 11 weight percent PHA, at most about 10 weight percent PHA, at most about 9 weight percent PHA, at most about 8 weight percent PHA, at most about 7 weight percent PHA, at most about 6 weight percent PHA, at most about 5 weight percent PHA, at most about 2.5 weight percent PHA, at most about 1 weight percent PHA). The solvent can be a single or mixed solvent.

The PHA solution can be applied to a substrate surface (e.g., by machine or by hand) to form a layer (e.g., a substantially uniform layer) of the PHA solution on the substrate surface. In some embodiments, the layer can have a thickness of at most about 300 microns (µ) (e.g., at most about 275µ, at most about 250µ, at most about 225µ, at most about 200µ, at most about 175µ, at most about 150µ).

Some or all of the solvent can then be removed to leave behind a layer of a PHA adhesive composition on the substrate surface. The solvent removal can be carried out by natural evaporation (e.g., under ambient conditions with substantially no deliberate displacement of solvent vapors from the vicinity of the substrate or forced evaporation) or by deliberate displacement of solvent vapors from the vicinity of the substrate (e.g., by a directed stream of air or an inert gas, such as nitrogen or argon). Solvent removal can be carried out, for example, at a temperature of at most about 40°C (e.g., at most about 35°C, at most about 30°C, at most about 25°C, at most about 20°C, at most about 15°C).

The extent of solvent removal can be monitored by gravimetric methods (e.g. drying of the substrate surface until a constant weight of the substrate surface is achieved) or spectroscopic techniques (e.g., removing a sample of the adhesive composition from the substrate surface and obtaining a ¹H NMR spectrum of the sample to detect the solvent). The substrate surface containing the layer of the PHA adhesive composition can be used for forming an adhesive bond with a second substrate surface when the PHA adhesive composition contains at most about 10 weight percent (e.g., at most about 9 weight percent, at most about 8 weight percent, at most about 7 weight percent, at most about 6 weight percent, at most about 5 weight percent, at most about 4 weight percent, at most about 3 weight percent, at most about 2 weight percent, at most about 1 weight percent, at most 0.5 weight percent, at most 0.1 weight percent) solvent.

The PHA adhesive composition can be formed by placing a PHA between two substrate surfaces and pressing the surfaces with a pressure (e.g., at most about 68.948 kPa (10 psig), at most about 34.474 kPa (5 psig), at most about 6.895 kPa (1 psig)) at a desired temperature (e.g., at most about 130°C (e.g., at most about 120°C, at most about 110°C, at most about 100°C, at most about 90°C, at most about 80°C) for a period of time (e.g., at most about 30 seconds, at most about 20 seconds, at most about 15 seconds, at most about 10 seconds, at most about 5 seconds, at most about 1 second). For example, a household iron can be used during this process. The pressed substrate surfaces can then be cooled (e.g.; to at most about 20°C, at most about 1,5°C, at most about 10°C) for a period of time (e.g., at least about 5 minutes , at least about 10 minutes, at least about 15 minutes). The substrate surfaces can then be separated and stored at a desired temperature (e.g., at least about 20°C, at least about 23°C, at least about 25°C, at least about 27°C) for a period of time (e.g., at least about 60 minutes, at least about 70 minutes, at least about 80 minutes, at least about 90 minutes, at least about 100 minutes)..

When two surfaces are to be adhered to one another, one substrate surface can be coated with the adhesive composition and the second surface can be uncoated. Alternatively, both surfaces can be coated with the adhesive composition.

Lamination can be carried out by applying pressure over the area of the contacted substrate surfaces, wherein the surfaces are disposed on a horizontal platform. The laminating pressure can be applied with, for example, the palm of a human hand, a hand-operated roller, or mechanical press.

Each substrate surface can represent a top, side, bottom, etc. of any article. The substrate surface can be an overlaying surface which is secured to the top, side, bottom, etc. of any article (e.g., a plastic film lining a cardboard box interior or exterior). Two substrate surfaces to be laminated can be located on the same article e.g., two overlapping flaps used to seal the contents of a box or similar container or can be located on two separate articles.

The substrate surfaces can be composed of materials, which can include, for example, Mylar, paper, coated paper, poly(tetrafluoroethylene) (PTFE), poly(ethylene terephthalate) (PET), PHA films, fibers, non-wovens or other articles, polylactic acid films, non wovens, food trays or containers, synthetic biodegradable polyesters films or articles, cellophane, or aluminum foil. Two substrate surfaces to be laminated can be made of the same material or can be made of different materials.

### EXAMPLE 1

### Determination of Surface Tack Time Value

A galvanised steel washer having mass of 13.85g with external diameter 38.17mm and internal diameter 13.41mm was solvent cleaned to remove surface grease using acetone and allowed to dry. The steel washer was lightly placed onto a horizontal PHA surface conditioned at 20-25C and allowed to remain on the surface for a period of 60 seconds, after which the PHA surface was inverted and time for the washer to debond measured.

### EXAMPLE 2

### Preparation of PHA Adhesive Composition Solutions

A one liter glass beaker is equipped with an overhead stirrer and is charged with 450 g of butyl acetate and then 50 g of poly(R-3-hydroxybutyrate co 33.5 % 4-hydroxybutyrate) (Mw = 110,000) is added portionwise with vigorous stirring at 25°C. Stirring is continued until all of the PHA is observed to dissolve.

### REFERENCE EXAMPLE 3

Poly R-3-hydroxybutyrate co 8% R-3-hydroxyvalerate (PHA1) having a glass transition temperature of+2C as measured by DSC (heating rate 10C/minute) and DSC crystallinity of approximately 54% was dissolved in dichloromethane and cast onto a Mylar polyester film and the solvent removed by forced evaporation. After 60 minutes two PHA1 films were laminated together under a pressure of 689.475 kPa (100 psi) for 10 seconds. No adhesion between the two films was observed, even when the laminating temperature was increase to 60C.

Surface tack time value of PHA1 was zero seconds. The test was repeated with an additional 50g placed on the washer during the initial contact period, surface tack time value was still zero seconds.

### REFERENCE EXAMPLES 4-7

Poly R-3-hydroxybutyrate co 8% R-3-hydroxyvalerate (PHA1) was dissolved in dichloromethane. To portions of this solution were added 50phr (parts per hundred PHA) and 100phr Foral 85 (Hercules Powder Co) a glycerol ester of hydrogenated wood rosin and Foral 105 (Hercules Powder Co) a pentareythritol ester of hydrogenated wood rosin. Films were cast onto Mylar polyester films and the solvent removed by forced evaporation. These were designated examples 4, 5, 6 and 7 respectively. After 60 minutes two films were laminated together under a pressure of 689.475 kPa (100 psi) for 10 seconds at 25C: negligible adhesion was observed for any of these compositions.

Surface tack time value of PHA1 was zero seconds. The test was repeated with an additional 50g placed on the washer during the initial contact period, surface tack time value was still zero seconds.

### REFERENCE EXAMPLES 8-9

Tone 85 a polycaprolactone polymer from Union Carbide having a glass transition temperature of -60C (PHA2) and DSC crystallinity of 50% was dissolved in dichloromethane. To portions of this solution was added 0phr and 50phr Foral 105 (Hercules Powder Co) a pentareythritol ester of hydrogenated wood rosin. Films were cast onto Mylar polyester films and the solvent removed by forced evaporation. These were designated examples 8 and 9. respectively. After 60 minutes two films were laminated together under a pressure of 334.738 kPa (50 psi) for 10 seconds at 25C: negligible adhesion was observed for any of these compositions.

Surface tack time value of PHA2 was zero seconds. The test was repeated with an additional 50g placed on the washer during the initial contact period, surface tack time value was still zero seconds.

### REFERENCE EXAMPLE 14

Poly R-3-hydroxyoctanoate (PHA3) having a glass transition temperature of-35G as measured by DSC and DSC crystallinity of 15% was dissolved in dichloromethane and cast onto a Mylar polyester film and the solvent removed by forced evaporation, the films had no surface finger tack. After 60 minutes two PHA3 films were laminated together under a pressure of 689.475 kPa (100 psi) for 10 seconds, a moderately strong bond was formed. Even after allowing the film to dry for 2 hours prior to lamination, an acceptable bond could be formed.

Surface tack time value of PHA3 was 2.5 seconds.

### REFERENCE EXAMPLE 11

Poly R-3-hydroxyoctanoate (PHA4) emulsion having a glass transition temperature of-35C as was cast onto paper and the water removed by forced evaporation, the films had no surface finger tack. After 2 hours two PHA4 films were laminated together under a pressure of 689.475 kPa (100 psi) for 10 seconds, a strong bond was formed with paper failure occuring.

Surface tack time value of PHA4 was 1.5 seconds.

### REFERENCE EXAMPLE 12

Films of poly R-3-hydroxyoctanoate (PHA5) were obtained by pressing the polymer between two PTFE sheets at 90C for 5 seconds, followed by cooling at 15C for 10 minutes, the films had no surface finger tack. The PHA5 films were stored at 25C for a further 60 minutes prior to being laminated together under a pressure of 689.475 kPa (100psi) for 10 seconds. The film could not be separated.

Surface tack time value of PHA5 was 1.7 seconds.

### EXAMPLE 13

Films of poly R 3-hydroxybutyrate co 20% 4-hydroxybutyrate (PHA6) having a glass transition temperature as measured by DSC of-14C and DSC crystallinity of 36% were obtained by pressing the polymer between two PTFE sheets at 120C for 5 seconds, followed by cooling at 15C for 10 minutes, the films had no surface finger tack. The PHA6 films were stored at 25C for a further 60 minutes prior to being laminated together under a pressure of 334.738 kPa (50psi) for 10 seconds. The film could not be separated.

Surface tack time value of PHA6 was 2 seconds.

### EXAMPLE 14

Films of poly R 3-bydroxybutyrate co 35% 4-hydroxybutyrate (PHA7) having a glass transition temperature as measured by DSC of -26C and DSC crystallinity of 15% were obtained by pressing the polymer between two PTFE sheets at 100C for 5 seconds, followed by cooling at 15C for 10 minutes. The films had very slight finger tack initially but this disappeared over the next 15 minutes. The PHA7 films were stored at 25C for a further 60 minutes prior to being laminated together under light hand pressure for 10 seconds. The film could not be separated.

Surface tack time value of PHA7 was 1 second.

### EXAMPLE 15

Poly R-3-hydroxybutyrate co 35% 4-hydroxybutyrate (PHA8) having a glass transition temperature as measured by DSC of-26C was dissolved in ethyl acetate and cast onto a Mylar polyester film and the solvent removed by forced evaporation- After 60 minutes two PHA8 films were laminated together under a pressure of 334.738 kPa (50psi) for 10 seconds, the films could not be separated.

Surface tack time value of PHA8 was 3.5 seconds.

### EXAMPLES 16

Films of poly R-3-hydroxybutyrate co 14% 4-hydroxybutyrate (PHA9) having a glass transition temperature as measured by DSC of-10C and polystyrene equivalent weight average molecular weight of 352,000 as measured by GPC were obtained by pressing the polymer between two PTFE sheets at 140C for 5 seconds, followed by cooling at 15C for 10 minutes The films had very slight finger tack initially but this disappeared over the next 15 minutes. The PHA films were stored at 25C for a further 60 minutes prior to being laminated together under a pressure of 689.475 kPa (100psi) for 10 seconds. The film could not be separated. If the PHA laminated under a pressure of 137.895 kPa (20psi) for 5 seconds, the films could be separated.

Surface tack time value of PHA9 was 0.5 seconds.

### EXAMPLE 17

Films ofpoly R-3-hydroxybutyrate co 14% 4-hydroxybutyrate (PHA10) having a glass transition temperature as measured by DSC of -10C and polystyrene equivalent weight average molecular weight of 98,000 as measured by GPC were obtained by pressing the polymer between two PTFE sheets at 140C for 5 seconds, followed by cooling at 15C for 10 minutes The films had very slight finger tack initially but this disappeared over the next 15 minutes The PHA films were stored at 25C for a further 60 minutes prior to being laminated together under a pressure of 137.895 kPa (20psi) for 5 seconds. The film could not be separated.

Surface tack time value of PHA10 was 1 second.

### EXAMPLE 18

A PHA polymer comprising 66.5% 3 R hydroxybutyrate and 33.5% 4 hydroxybutyrate of molecular weight (Mw) 110,000 was dissolved in butyl acetate to produce a solution with 13% w/w polymer content. The solution was applied to a untreated PET film using a knurled bar to provide a uniform 200 micron wet film. The solvent was removed by natural evaporation at 20-25C. After 24 hours no solvent could be detected in the coated PET sample. The PHA film was tack free to touch. When two PHA coated PET films were brought gently into contact (contact pressure estimated at <6.895 kPa (<1psi)) immediate adhesion between the PHA films was observed. Good autohesion was observed even after the film had been aged for 10 days.

### EXAMPLE 19

As example 18 but the PHA comprising 70% 3 R hydroxybutyrate and 30% 4 hydroxybutyrate of molecular weight (Mw) 350,000 was dissolved in butyl acetate to produce a 10% solids content solution. Good autohesion between PHA films were observed after the film had been allowed to age for 24 hours at 20-25C.

### EXAMPLE 20

As example 18 but the PHA comprising 78% 3 R hydroxybutyrate and 22% 4 hydroxybutyrate of molecular weight (Mw) 850,000 was dissolved in acetone to produce a 8% solids content solution. Autohesion was observed after allowing the film to dry for 60 minutes, however autohesion was lost when tested after 24 hours.

### EXAMPLE 21

As example 18 but PET film replaced by Cellophane film supplied by UCB. Excellent autohesion was observed, after the film had been aged at 20-25C for 10 days.

### EXAMPLE 22

A PHA polymer comprising 66.5% 3 R hydroxybutyrate and 33-5% 4 hydroxybutyrate of molecular weight (Mw) 110,000 was dissolved in butyl acetate to produce a solution with 13% w/w polymer content. The solution was applied to a plastic film using a knurled bar to provide a uniform 200 micron wet film. The solvent was removed by natural evaporation at 20-25C.

Cold Seal Adhesion: lamination of the adhesive coated film to a piece of uncoated film using very light hand pressure (<13.790 kPa (<2psi)). Immediately after lamination, the strength of the adhesive bond was assessed. The results are summarized in Table 1.

**Table 1. Summary of Cold Seal Adhesion Experiments.**

| Coated substrate | Aging period of Coated substrate | Uncoated substrate | Strength of bond |
|---|---|---|---|
| Untreated PET | 24 hrs | Untreated PET | Very good |
| Untreated PET | 72 hrs | Cellophane | Very good |
| Untreated PET | 240 hrs | PLA | Very good |
| Untreated PET | 240 hrs | Coated paper | Good |
| Cellophane | 24hrs | Untreated PET | Very good |
| Cellophane | 72 hrs | Cellophane | Very good |
| Cellophane | 240 hrs | PLA | Very good |

### EXAMPLE 23

A PHA polymer comprising 66.5% 3 R hydroxybutyrate and 33.5% 4 hydroxybutyrate of molecular weight (Mw) 110,000 was dissolved in butyl acetate to produce a solution with 13% w/w polymer content. The solution was applied to a plastic film using a knurled bar to provide a uniform 200 micron wet film. The solvent was removed by natural evaporation at 20-25C. Heat Seal Adhesion: lamination of the adhesive coated film to a piece of uncoated film using a domestic iron set on setting 2 (surface temperature 70-80C) and light hand pressure (<34.474 kPa (<5psi)). Immediately after lamination the strength of the adhesive bond was assessed. The results are summarized in Table 2.

**Table 2. Summary of Hot Seal Adhesion Experiments.**

| Coated substrate | Aging period of Coated substrate | Uncoated substrate | Strength of bond |
|---|---|---|---|
| Untreated PET | 24 hrs | Untreated PET | Cohesive failure |
| Untreated PET | 72 hrs | Cellophane | Cohesive failure |
| Untreated PET | 240 hrs | PLA | Cohesive failure |
| Untreated PET | 240hrs | Coated paper | Paper surface failure |
| Untreated PET | 240 hrs | Aluminium foil. | Good strength, adhesive failure |
| Cellophane | 24 hrs | Untreated PET | Cohesive failure |
| Cellophane | 72 brs | Cellophane | Cohesive failure |
| Cellophane | 240 hrs | PLA | Cohesive failure |

### EXAMPLE 24

A PHA polymer comprising 66.5% 3 R hydroxybutyrate and 33.5% 4 hydroxybutyrate of molecular weight (Mw) 110,000 was dissolved in butyl acetate to produce a solution with 13% w/w polymer content The solution was applied to a crosslinked polysiloxane coated release paper using a knurled bar to provide a uniform 200 micron wet film. The solvent was removed by natural evaporation at 20-25C. The dry film was laminated to a paper foil using a warm iron and the release paper removed to produce an adhesive coated paper substrate. The coated paper was then hot laminated to various substrates including untreated PET, Cellophane, PLA, aluminum foil, glass simulating a labeling process. In all case good adhesion was observed with cohesive failure after the bond had been allowed to mature for 15-30 minutes. Application of a warm iron to the paper surface of a disbanded sample resulted in re-adhesion between the two substrates with equivalent adhesion as with the original bond.

## Claims

1. An adhesive composition comprising a PHA,
wherein the PHA has a weight average molecular weight of from 10,000 Daltons to 900,000 Daltons and is selected from the group comprising poly 3-hydroxybutyrate-co-3-hydroxypropionate, poly 3-hydroxybutyrate-co-4-hydroxybutyrate, poly 3-hydzoxybutyrate-co-4-hydroxypentenoate, poly 3-hydroxybutyrate-co-3-hydroxyhexanoate, poly 3-hydroxybutyrate-co-4-hydroxyvalerate, poly 3-hydroxybutyrate-co-6-hydroxyhexanoate, poly 3-hydroxybutyrate-co-3-hydroxyheptanoate, poly 3-hydzoxybutyzate-co-3_ hydroxyoctanoate, poly 3-hydroxybntyzate-eo-3-hydroxydeeanoate, poly 3-hydroxybutyrate-co-3-hydroxydodecanotate, poly 3-hydroxybutyrate-co-3-hydzoxyoctanoate-co-3-hydroxydecanoate and poly 3-hydroxybutyrate-co-3-hydroxyoctadecanoate,
the adhesive composition having a surface tack time value of at most 15 seconds, the surface tack time being determined by
placing a galvanised steel washer having mass of 13.85 g with external diameter 38.17 mm and internal diameter 13.41 mm onto a horizontally displaced surface that is coated with the PHA adhesive composition, and
inverting the PHA surface, the surface tack time being the time taken for the washer to fall from the surface,
and wherein, when exposed to a pressure of at most 689.475 kPa (100 psig), the adhesive composition can form a bond with a surface or with itself, the bond having a peel bond strength of at least 10 Nm⁻², as determined by the ASTM 1995-92 test method of placing bonded surfaces in an Instron tensile testing machine and evaluating the force required to separate the surfaces using a 90 degree peel angle and a crosshead speed of 25 millimetre per minute.

2. The adhesive composition of claim 1, wherein the adhesive composition has a surface tack time value of:
(i) at most 5 seconds; or
(ii) at most 1 second.

3. The adhesive composition of claim 1, wherein the pressure is:
(i) at most 334.738 kPa (50 psig);
(ii) at most 68.948 kPa (10 psig); or
(iii) at most 6.895 kPa (1 psig).

4. The adhesive composition of claim 1, wherein the peel bond strength is:
(i) at least 100 Nm⁻²; or
(ii) at least 500 Nm⁻².

5. The adhesive composition of claim 1, further comprising a solvent for the PHA.

6. The adhesive composition of claim 5, wherein the adhesive composition contains:
(i) at most 90 weight percent solvent;
(ii) at most 80 weight percent solvent;
(iii) at most 75 weight percent solvent;
(iv) at most 50 weight percent solvent;
(v) at most 35 weight percent solvent; or
(vi) at most 1 weight percent solvent.

7. The adhesive composition of claim 5, wherein the solvent comprises an organic solvent or an aqueous solvent.

8. The adhesive composition of claim 1, further comprising a mixed solvent system.

9. The adhesive composition of claim 8, wherein the mixed solvent system comprises water and a water immiscible organic solvent.

10. The adhesive composition of claim 1, wherein the PHA has a glass transition temperature of from -40°C to 20°C.

11. The adhesive composition, of claim 1, wherein the PHA has a crystallinity of from 5% to 65%.

12. The adhesive composition of claim 1, wherein the composition has an open time of:
(i) at least 10 minutes;
(ii) at least 100 minutes; or
(iii) at least 200 minutes.

13. The adhesive composition of claim 1, wherein the adhesive composition is substantially free of adhesive additives.

14. The adhesive composition of claim 1, wherein the adhesive composition comprises at most 95 weight percent adhesive additives.

15. The adhesive composition of claim 1, wherein the adhesive composition comprises at most 50 weight percent adhesive additives.

16. The adhesive composition of claim 1, wherein the adhesive composition comprises at most 10 weight percent adhesive additives.

17. The adhesive composition of claim 1, wherein the adhesive composition comprises at most 1 weight percent adhesive additives.

18. The adhesive composition of claim 13, wherein the adhesive additives are selected from the group consisting of tackifiers, cross-linking agents, initiators, colorants, waxes, stabilizers and plasticizers.

19. The adhesive composition of claim 1, wherein the adhesive composition comprises:
(i) at least five weight percent PHA;
(ii) at least 10 weight percent PHA;
(iii) at least 25 weight percent PHA; or
(iv) at least 50 weight percent PHA.

20. The adhesive composition of claim 1, wherein the adhesive composition comprises at least two different PHAs.

21. The adhesive composition of claim 15, wherein one of the PHAs has a first weight average molecular weight, and a different PHA has a second weight average molecular weight, a difference between the first and second weight average molecular weights being:
(i) at least 1,000 Daltons;
(ii) at least 50,000 Daltons; or
(iii) at least 100,000 Daltons.

22. The adhesive composition of claim 1; wherein the PHA has a polydispersity index of:
(i) at least two;
(ii) at least 2.2; or
(iii) at least 2.5.

23. An article, comprising:
a substrate having a surface; and
an adhesive composition comprising a PHA, as defined in Claim 1,
wherein the composition is supported by the surface of the substrate.

24. The article of claim 23, wherein the peel bond strength is at least 100 Nm⁻².

25. The article of claim 23, wherein the pressure is at most 334.738 kPa (50psig).

26. The article of claim 23, wherein the composition has an open time of at least 70 minutes.

27. The article of claim 23, wherein the composition comprises at least two different PHAs.

28. The article of claim 27, wherein one of the PHAs has a first weight average molecular weight, and a different PHA has a second weight average molecular weight, a difference between the first and second weight average molecular weights being at least 1,000 Daltons.

29. The article of claim 23, wherein the PHA has a glass transition temperature of from -40°C to abut 20°C.

30. The article of claim 23, wherein the PHA has a crystallinity of from 5% to 65%.

31. A method for preparing an article as defined in Claim 23, the method comprising:
contacting a composition with a surface of an article, the composition containing a PHA as defined in Claim 1. and a solvent for the PHA; and
processing the composition.

## Patentansprüche

1. Klebstoff, der ein PHA umfasst, wobei das PHA ein gewichtsmittleres Molekulargewicht von 10.000 Dalton bis 900.000 Dalton aufweist und aus der Gruppe ausgewählt ist, die Poly-3-Hydroxybutyrat-Co-3-Hydroxypropionat, Poly-3-Hydroxybutyrat-Co-4-Hydroxybutyrat, Poly-3-Hydroxybutyrat-Co-4-Hydroxyppentenoat, Poly-3-Hydroxybutyrat-Co-3-Hydroxyhexanoat, Poly-3-Hydroxybutyrat-Co-4-Hydroxyvalerat, Poly-3-Hydroxybutyrat-Co-6-Hydroxyhexanoat, Poly-3-Hydroxybutyrat-Co-3-Hydroxyheptanoat, Poly-3-Hydroxybutyrat-Co-3-Hydroxyoctanoat, Poly-3-Hydroxybutyrat-Co-3-Hydroxydecanoat, Poly-3-Hydroxybutyrat-Co-3-Hydroxydodecanoat, Poly-3-Hydroxybutyrat-Co-3-Hydroxyoctanoat-Co-3-Hydroxydecanoat und Poly-3-Hydroxybutyrat-Co-3-Hhydroxyoctadecanoat umfasst,
wobei der Klebstoff einen Oberflächenklebezeitwert von höchstens 15 Sekunden aufweist, wobei die Oberflächenklebezeit bestimmt wird durch
Anordnen einer galvanisierten Stahlscheibe mit einer Masse von 13,85 g, einem Außendurchmesser von 38,17 mm und einem Innendurchmesser von 13,41 mm auf einer horizontal verlegten Oberfläche, die mit dem PHA-Klebstoff beschichtet ist, und
Umwenden der PHA-Oberfläche,
wobei die Oberflächenklebezeit die Zeit ist, die die Scheibe braucht, um von der Oberfläche zu fallen,
und wobei der Klebstoff, wenn er einem Druck von höchstens 689,475 kPa (100 psi) ausgesetzt wird, eine Klebeverbindung mit einer Oberfläche oder sich selbst bilden kann, wobei die Klebeverbindung eine Trennkraft von mindestens 10 Nm⁻² aufweist, bestimmt mit dem Test-Verfahren ASTM 1995-92, bei dem durch Klebstoff verbundene Oberflächen in einem Instron-Zugfestigkeitsprüfapparat angeordnet werden und die zum Trennen der Oberflächen benötigte Kraft unter Verwendung eines 90-Grad-Abschälwinkels und einer Traversengeschwindigkeit von 25 Millimetern pro Minute bestimmt wird.

2. Klebstoff nach Anspruch 1, wobei der Klebstoff eine Oberflächenklebezeit von:
(i) höchstens 5 Sekunden oder
(ii) höchstens 1 Sekunde
aufweist.

3. Klebstoff nach Anspruch 1, wobei der Druck:
(i) höchstens 334,738 kPa (50 psi),
(ii) höchstens 68,948 kPa (10 psi) oder
(iii) höchstens 6,895 kPa (1 psi)
beträgt.

4. Klebstoff nach Anspruch 1, wobei die Trennkraft:
(i) höchstens 100 Nm⁻² oder
(ii) höchstens 500 Nm⁻²
beträgt.

5. Klebstoff nach Anspruch 1, der ferner ein Lösemittel für das PHA umfasst.

6. Klebstoff nach Anspruch 5, wobei der Klebstoff:
(I) höchstens 90 Gewichtprozent Lösemittel,
(II) höchstens 80 Gewichtprozent Lösemittel,
(III) höchstens 75 Gewichtprozent Lösemittel,
(IV) höchstens 50 Gewichtprozent Lösemittel,
(V) höchstens 35 Gewichtprozent Lösemittel oder
(VI) höchstens 1 Gewichtprozent Lösemittel
enthält.

7. Klebstoff nach Anspruch 5, wobei das Lösemittel ein organisches Lösemittel oder ein wässriges Lösemittel umfasst.

8. Klebstoff nach Anspruch 1, der ferner ein gemischtes Lösemittelsystem umfasst.

9. Klebstoff nach Anspruch 8, wobei das gemischte Lösemittelsystem Wasser und ein nicht mit Wasser mischbares organisches Lösemittel umfasst.

10. Klebstoff nach Anspruch 1, wobei das PHA eine Glasübergangstemperatur von -40 °C bis 20 °C aufweist.

11. Klebstoff nach Anspruch 1, wobei das PHA eine Kristallinität von 5 % bis 65 % aufweist.

12. Klebstoff nach Anspruch 1, wobei der Klebstoff eine Offenzeit von:
(i) mindestens 10 Minuten,
(ii) mindestens 100 Minuten oder
(iii) mindestens 200 Minuten
aufweist.

13. Klebstoff nach Anspruch 1, wobei der Klebstoff im Wesentlichen frei von Klebstoffzusätzen ist.

14. Klebstoff nach Anspruch 1, wobei der Klebstoff höchstens 95 Gewichtsprozent Klebstoffzusätze umfasst.

15. Klebstoff nach Anspruch 1, wobei der Klebstoff höchstens 50 Gewichtsprozent Klebstoffzusätze umfasst.

16. Klebstoff nach Anspruch 1, wobei der Klebstoff höchstens 10 Gewichtsprozent Klebstoffzusätze umfasst.

17. Klebstoff nach Anspruch 1, wobei der Klebstoff höchstens 1 Gewichtsprozent Klebstoffzusätze umfasst.

18. Klebstoff nach Anspruch 13, wobei die Klebstoffzusätze aus der Gruppe ausgewählt sind, die aus Klebrigmachern, Vernetzungsmitteln, Initiatoren, Farbstoffen, Wachsen, Stabilisatoren und Weichmachern besteht.

19. Klebstoff nach Anspruch 1, wobei der Klebstoff:
(i) mindestens 5 Gewichtsprozent PHA,
(ii) mindestens 10 Gewichtsprozent PHA,
(iii) mindestens 25 Gewichtsprozent PHA, oder
(iv) mindestens 50 Gewichtsprozent PHA
umfasst.

20. Klebstoff nach Anspruch 1, wobei der Klebstoff mindestens zwei verschiedene PHA umfasst.

21. Klebstoff nach Anspruch 15, wobei eines der PHA ein erstes gewichtsmittleres Molekulargewicht aufweist und ein anderes PHA ein zweites gewichtsmittleres Molekulargewicht aufweist, wobei die Differenz zwischen dem ersten und dem zweiten gewichtsmittleren Molekulargewicht:
(i) mindestens 1.000 Dalton,
(ii) mindestens 50.000 Dalton oder
(iii) mindestens 100.000 Dalton
beträgt.

22. Klebstoff nach Anspruch 1, wobei das PHA einen Polydispersions-Index von:
(i) mindestens 2,
(ii) mindestens 2,2 oder
(iii) mindestens 2,5
aufweist.

23. Gegenstand, der Folgendes umfasst:
ein Substrat mit einer Oberfläche und
einen Klebstoff, der ein PHA wie in Anspruch 1 definiert umfasst,
wobei der Klebstoff von der Oberfläche des Substrats getragen wird.

24. Gegenstand nach Anspruch 23, wobei die Trennkraft mindesten 100 Nm⁻² beträgt.

25. Gegenstand nach Anspruch 23, wobei der Druck mindestens 334,738 kPa (50 psi) beträgt.

26. Gegenstand nach Anspruch 23, wobei der Klebstoff eine Offenzeit von mindestens 70 Minuten aufweist.

27. Gegenstand nach Anspruch 23, wobei der Klebstoff mindestens zwei verschiedene PHA aufweist.

28. Gegenstand nach Anspruch 27, wobei eines der PHA ein erstes gewichtsmittleres Molekulargewicht aufweist und ein anderes PHA ein zweites gewichtsmittleres Molekulargewicht aufweist, wobei eine Differenz zwischen dem ersten und dem zweiten gewichtsmittleren Molekulargewicht mindestens 1.000 Dalton beträgt.

29. Gegenstand nach Anspruch 23, wobei das PHA eine Glasübergangstemperatur von -40 °C bis 20 °C aufweist.

30. Gegenstand nach Anspruch 23, wobei das PHA eine Kristallinität von 5 % bis 65 % aufweist.

31. Verfahren zur Herstellung eines in Anspruch 23 definierten Gegenstandes, wobei das Verfahren Folgendes umfasst:
In-Kontakt-Bringen eines Klebstoffes mit einer Oberfläche eines Gegenstandes, wobei der Klebstoff ein PHA wie in Anspruch 1 definiert sowie ein Lösemittel für das PHA enthält, und
Verarbeiten des Klebstoffes.

## Revendications

1. Composition adhésive comprenant un PHA,
dans laquelle le PHA a un poids moléculaire moyen pondéral allant de 10 000 Daltons à 900 000 Daltons et est choisi dans le groupe constitué par le poly 3-hydroxybutyrate-co-3-hydroxypropionate, le poly 3-hydroxybutyrate-co-4-hydroxybutyrate, le poly 3-hydroxybutyrate-co-4-hydroxypenténoate, le poly 3-hydroxybutyrate-co-3-hydroxyhexanoate, le poly 3-hydroxybutyrate-co-4-hydroxyvalérate, le poly 3-hydroxybutyrate-co-6-hydroxyhexanoate, le poly 3-hydroxybutyrate-co-3-hydroxyheptanoate, le poly 3-hydroxybutyrate-co-3-hydroxyoctanoate, le poly 3-hydroxybutyrate-co-3-hydroxydécanoate, le poly 3-hydroxybutyrate-co-3-hydroxydodécanoate, le poly 3-hydroxybutyrate-co-3-hydroxyoctanoate-co-3-hydroxydécanoate et le poly 3-hydroxybutyrate-co-3-hydroxyoctadécanoate,
la composition adhésive ayant une valeur de temps de pégosité de surface d'au plus 15 secondes, le temps de pégosité de surface étant déterminé en
plaçant une rondelle en acier galvanisé d'une masse de 13,85 g d'un diamètre externe de 38,17 mm et d'un diamètre interne de 13,41 mm sur une surface déplacée horizontalement qui est revêtue de la composition adhésive de PHA, et
en retournant la surface de PHA,
le temps de pégosité de surface étant le temps mis par la rondelle pour tomber de la surface,
et dans laquelle, lorsqu'elle est exposée à une pression d'au plus 689,475 kPa (100 psig), la composition adhésive peut former une liaison avec une surface ou avec elle-même, la liaison ayant une résistance à l'arrachement d'au moins 10 Nm⁻², telle que déterminée selon la méthode de test ASTM 1995-92 consistant à placer les surfaces liées dans une machine de test de traction Instron et à évaluer la force nécessaire pour séparer les surfaces en utilisant un angle d'arrachement de 90 degrés et une vitesse de traverse de 25 millimètres par minute.

2. Composition adhésive selon la revendication 1, dans laquelle la composition adhésive a une valeur de pégosité de surface de :
(i) au plus 5 secondes ; ou
(ii) au plus 1 seconde.

3. Composition adhésive selon la revendication 1, dans laquelle la pression est :
(i) d'au plus 344,738 kPa (50 psig) ;
(ii) d'au plus 68,948 kPa (10 psig) ; ou
(iii) d'au plus 6,895 kPa (1 psig).

4. Composition adhésive selon la revendication 1, dans laquelle la résistance à l'arrachement est :
(i) d'au moins 100 Nm⁻² ; ou
(ii) d'au moins 500 Nm⁻².

5. Composition adhésive selon la revendication 1, comprenant en outre un solvant pour le PHA.

6. Composition adhésive selon la revendication 5, dans laquelle la composition adhésive contient :
(i) au plus 90 pour cent en poids de solvant ;
(ii) au plus 80 pour cent en poids de solvant ;
(iii) au plus 75 pour cent en poids de solvant ;
(iv) au plus 50 pour cent en poids de solvant ;
(v) au plus 35 pour cent en poids de solvant ; ou
(vi) au plus 1 pour cent en poids de solvant.

7. Composition adhésive selon la revendication 5, dans laquelle le solvant comprend un solvant organique ou un solvant aqueux.

8. Composition adhésive selon la revendication 1, comprenant en outre un système de mélange de solvants.

9. Composition adhésive selon la revendication 8, dans laquelle le système de mélange de solvant comprend de l'eau et un solvant organique non miscible à l'eau.

10. Composition adhésive selon la revendication 1, dans laquelle le PHA a une température de transition vitreuse allant de -40°C à 20°C.

11. Composition adhésive selon la revendication 1, dans laquelle le PHA a une cristallinité allant de 5% à 65%.

12. Composition adhésive selon la revendication 1, dans laquelle la composition a un temps ouvert de :
(i) au moins 10 minutes ;
(ii) au moins 100 minutes ; ou
(iii) au moins 200 minutes.

13. Composition adhésive selon la revendication 1, dans laquelle la composition adhésive est essentiellement exempte d'additifs d'adhésion.

14. Composition adhésive selon la revendication 1, dans laquelle la composition adhésive comprend au plus 95 pour cent en poids d'additifs d'adhésion.

15. Composition adhésive selon la revendication 1, dans laquelle la composition adhésive comprend au plus 50 pour cent en poids d'additifs d'adhésion.

16. Composition adhésive selon la revendication 1, dans laquelle la composition adhésive comprend au plus 10 pour cent en poids d'additifs d'adhésion.

17. Composition adhésive selon la revendication 1, dans laquelle la composition adhésive comprend au plus 1 pour cent en poids d'additifs d'adhésion.

18. Composition adhésive selon la revendication 13, dans laquelle les additifs d'adhésion sont choisis dans le groupe constitué des agents poisseux, des agents de réticulation, des initiateurs, des colorants, des cires, des stabilisants et des plastifiants.

19. Composition adhésive selon la revendication 1, dans laquelle la composition adhésive comprend :
(i) au moins cinq pour cent en poids de PHA ;
(ii) au moins 10 pour cent en poids de PHA ;
(iii) au moins 25 pour cent en poids de PHA ; ou
(iv) au moins 50 pour cent en poids de PHA.

20. Composition adhésive selon la revendication 1, dans laquelle la composition adhésive comprend au moins deux PHA différents.

21. Composition adhésive selon la revendication 15, dans laquelle l'un des PHA a un premier poids moléculaire moyen pondéral, et un PHA différent a un second poids moléculaire moyen pondéral, une différence entre le premier et le second poids moléculaire moyen pondéral étant :
(i) d'au moins 1000 Daltons ;
(ii) d'au moins 50 000 Daltons ; ou
(iii) d'au moins 100 000 Daltons.

22. Composition adhésive selon la revendication 1, dans laquelle le PHA a un indice de polydispersité de :
(i) au moins deux ;
(ii) au moins 2,2 ; ou
(iii) au moins 2,5.

23. Article, comprenant :
un substrat ayant une surface ; et
une composition adhésive comprenant un PHA, tel que défini dans la revendication 1,
dans lequel la composition est supportée par la surface du substrat.

24. Article selon la revendication 23, dans lequel la résistance à l'arrachement est d'au moins 100 Nm⁻².

25. Article selon la revendication 23, dans lequel la pression est d'au plus 344,738 kPa (50 psig).

26. Article selon la revendication 23, dans lequel la composition à un temps ouvert d'au moins 70 minutes.

27. Article selon la revendication 23, dans lequel la composition comprend au moins deux PHA différents.

28. Article selon la revendication 27, dans lequel l'un des PHA a un premier poids moléculaire moyen pondéral, et un PHA différent a un second poids moléculaire moyen pondéral, une différence entre le premier et le second poids moléculaire moyen pondéral étant d'au moins 1000 Daltons.

29. Article selon la revendication 23, dans lequel le PHA. a une température de transition vitreuse allant de -40°C à 20°C.

30. Article selon la revendication 23, dans lequel le PHA a une cristallinité allant de 5% à 65%.

31. Procédé de préparation d'un article tel que défini dans la revendication 23, le procédé comprenant :
la mise en contact d'une composition avec une surface d'un article, la composition contenant un PHA tel que défini dans la revendication 1 et un solvant du PHA ; et
le traitement de la composition.
